# EUROPEAN PATENT APPLICATION

(11) **EP 1 790 969 A1**
(43) Date of publication of application: **30.05.2007**
(21) Application number: 06024052.0
(22) Date of filing: 20.11.2006
(51) Int. Cl.: G01N 21/03, G01N 21/35, G01N 21/61

(54) **Gas sensor array with a light channel in the form of a conical section rotational member**

(30) Priority: 23.11.2005 DE 102005055860
(71) Applicant: Tyco Electronics Raychem GmbH, 85521 Ottobrunn (DE)
(72) Inventor: Maehlich, Reinhold, 80995 München (DE); Minuth, Rudi, 85354 Freising (DE)
(74) Representative: Grünecker, Kinkeldey, Stockmair & Schwanhäusser Anwaltssozietät

(57) **Abstract**

A gas sensor array has at least one radiation source, a gas measuring chamber, which can be filled with a measuring gas that contains at least one analyte to be measured, and at least one radiation detector, which generates an output signal dependent on the presence and/or concentration of the analyte. The gas measuring chamber (110) has a concave mirror which is formed by reflective inner walls of the housing (106, 112), and the inner walls at least partially take the form of a rotational member produced by a conical section, which is designed in such a manner as to result in bundling of the emitted radiation in a region (116) at which the detector (108) is arranged.

## Description

The present invention relates to a gas sensor array with at least one radiation source emitting radiation, a gas measuring chamber, which can be filled with a measuring gas that contains at least one analyte to be measured, and with at least one radiation detector, which generates an output signal dependent on the presence and/or concentration of the analyte. In particular, the present invention relates to such gas sensor arrays in miniaturized form as can be used, for example, in the motor vehicle sector.

Gas sensor arrays are known for the detection of a wide range of analytes, for example, methane or carbon dioxide, and are disclosed, for example, in European patent application EP 1 566 626 A1 laid open for public inspection. Here, these gas sensor arrays are based on the idea that many polyatomic gases absorb radiation, in particular in the infrared wavelength range. Such absorption occurs in a wavelength characteristic for the relevant gas, for example, at 4.24 µm in the case of carbon dioxide (CO2). With the help of such infrared gas sensors it is thus possible to determine the presence of a gas component and/or the concentration of this gas component.

Gas sensor arrays normally have a source of radiation, an absorption section, which is also referred to as the measuring chamber or light channel, and a radiation detector. The intensity of radiation measured by the radiation detector is an indication of the concentration of the absorbing gas. Here, use can be made either of a broadband source of radiation with the wavelength of interest being adjusted via an interference filter or grid, or it is possible to use a selective source of radiation, for example a light-emitting diode (LED) or a laser, in combination with non wavelength-selective radiation receivers.

In particular, the detection of carbon dioxide is today becoming increasingly important in the motor vehicle sector. This is partly due to the fact that in motor vehicles the carbon dioxide content of the interior air is monitored to increase energy efficiency in terms of heating and air-conditioning in order to initiate a supply of fresh air via a corresponding air vent control system only as needed, i.e. when there is a high carbon dioxide concentration. On the other hand, modern air-conditioning systems are based on carbon dioxide as coolant. The carbon dioxide gas sensors can thus perform a monitoring function in association with escaping carbon dioxide in the event of possible defects. However, such sensors must satisfy extremely stringent requirements in terms of robustness, reliability and above all size, especially in the motor vehicle sector.

From European patent application EP 1 566 626 A1, it is known that the detector and the radiation source are arranged in a housing in such a manner that inner surfaces of this housing, which are equipped with a reflective coating, form a light channel directing the light to the detector. Here, each radiation source is assigned a separate light channel formed by a hemispherical concave mirror and a tube.

However, the array shown in this application has the disadvantage that the light efficiency is comparably low in the range of the maximum permissible angle of incidence diverging from the main axis of the detector.

The object forming the basis for the present invention is thus to provide an improved gas sensor array of the type specified above, which nevertheless ensures an increased light efficiency and the highest possible selectivity as well as a robust and compact design and low-cost manufacture.

This object is achieved by a gas sensor array with the features of claim 1. Advantageous developments of the gas sensor array according to the invention form the subject of the sub-claims.

The present invention is based on the fundamental idea that light efficiency can be significantly increased with simple geometry of the light channel and an array of components suitable for production when a housing containing the radiation source, the gas measuring chamber and the detector has reflective inner walls which form a concave mirror and at least partially take the form of a rotational member produced by a conical section, which is designed in such a manner as to result in bundling of the radiation emitted at a region in which the detector is arranged. In this way, a much greater light efficiency can be achieved with the same lamp intensity. In addition, the proportion of light outside the maximum permissible angle of incidence can be reduced, thus allowing the various frequency ranges to be separated more clearly from each other. Here, the maximum permissible angle of incidence depends on such factors as the choice of the filter arranged before the detector and may be 20 degrees, for example. In terms of production technology such a housing shape can be manufactured with comparably simple tools.

The rotational member can be formed by a rotational ellipsoid, a rotational paraboloid or a rotational hyperboloid and also by parts of these bodies.

In the geometrically simplest case, the radiation source is located at a first focal point of a rotational ellipsoid, while the detector is located at a second focal point of the rotational ellipsoid on which the radiation emitted by the radiation source is focused.

This array, however, has the disadvantage that a sensor of the detector has to be aligned crosswise to a main axis of the gas sensor array and thus cannot be simply mounted on the same printed circuit board as the radiation source. According to an advantageous development of the present invention, it is thus possible to provide, in addition to the rotationally elliptical shape of the gas measuring chamber, for at least one tilted mirror which deflects the bundled radiation once again so that it strikes the sensor of the detector. Such a tilted mirror is preferably designed as a flat mirror. It is, however, clear that another concave mirror can also be provided if needed.

Given that the housing is formed by a first half and a second half, which are joined together in such a manner as to form a substantially closed gas measuring chamber, it is possible to simplify assembly of the gas sensor array according to the invention to a large extent so that production thereof can also be automated.

According to an advantageous development of the present invention, the radiation source and the detector are held in the first half at least partially. In this way, the mechanically sensitive components are protected in the first half during the further assembly steps.

The gas sensor array according to the invention can be integrated in electronic systems in a particularly space-saving manner where it is designed so that it can be mounted on a printed circuit board as a module. This also offers the advantage that the necessary evaluation electronics, which, for example, are used for further processing of the output signal generated by the detector, can be installed on the same circuit carrier, for example a printed circuit board.

The advantageous properties of the gas sensor array according to the invention are then particularly useful when the radiation to be detected is infrared radiation and the at least one radiation source is formed by an infrared radiation source, preferably a lamp that emits a broadband light spectrum. Alternatively, a light-emitting diode (LED) can also be used, whereby the latter has the advantage that it is possible to dispense with filter arrays for wavelength selection.

According to an especially advantageous embodiment, the gas sensor array according to the invention has a measuring radiation source and a reference radiation source. These two radiation sources are arranged symmetrically to at least one geometrical axis of the gas measuring chamber and the detector is arranged on this axis of symmetry in such a manner that the paths of the rays of the radiation sources have the same effective path length to the detector. Such an array can be operated, for example, in such a manner that, as disclosed in German patent specification DE 199 25 196 C2, the reference radiation source is switched on at periodic intervals to check the ageing condition of the radiation source. Deviations in relation to the output signals of the detector with the reference radiation source switched on and the measuring radiation source switched off provide information about ageing of the measuring radiation source and this can be compensated for as appropriate. This provides for a marked increase in the reliability and service life of the gas sensor array particularly in the motor vehicle sector.

If the two radiation sources are arranged so that they are positioned substantially next to each other and their ray paths only enclose a comparably small angle, manufacture of the gas sensor array can be simplified to a marked extent. In order to achieve the greatest possible bundling of the respective radiation at the detector, the rotationally elliptical form of the gas measuring chamber can be interrupted by a connecting region between the two radiation sources and the detector. This connecting region, according to a first embodiment, is shaped as part of an elliptical cylinder jacket, which in a longitudinal direction, i.e. in the direction of the connection between the radiation source and the detector, follows the curvature of the rotational ellipsoid but is not curved in a transversal direction, a flat projection of this connecting region being rectangular. In this way, each of the two radiation sources is located at the focal point of the rotationally ellipsoidal inner surface of the housing closest to it and its radiation is bundled particularly effectively.

The disadvantage of this array is, however, that two focal points likewise occur at the site of the detector. To overcome this disadvantage, according to a second embodiment, the inner walls of the housing can be designed in such a manner that the connecting region in the form of an elliptical cylinder jacket has a trapezoidal flat projection. Thus, each of the two radiation sources is then located at the focal point of the half of the rotational ellipsoid assigned thereto while the second focal points coincide and lie on a sensor of the detector.

To increase the accuracy of measurement, at least one temperature sensor can also be provided for monitoring the temperature in the gas measuring chamber.

An especially low-cost and mechanically stable option for manufacturing the housing is to make it from a plastic material using injection-molding. Here, the reflective coating can take the form of a metal coating, which is applied by means of sputtering, vapor-deposition or electroplating. It is possible to use gold here, for example.

The advantageous properties of the gas sensor array according to the invention are particularly useful for the detection of carbon dioxide, for example, in the motor vehicle sector, and for monitoring carbon dioxide leaks as well as for checking the air quality in an interior of a vehicle. However, the gas sensor array according to the invention can of course also be used for the detection of any other gases.

The invention is explained in greater detail below with reference to the advantageous configurations shown in the attached drawings. Similar or corresponding elements of the invention are provided with the same reference signs. In the drawings:
Fig. 1 is a sectional view of a gas sensor array of the invention according to a first embodiment;
Fig. 2 is a perspective view of part of the array from Fig. 1;
Fig. 3 is a longitudinal section through the array from Fig. 1;
Fig. 4 is a perspective exploded view of a gas sensor array according to another advantageous embodiment;
Fig. 5 shows the array from Fig. 4 under consideration of direction of the light rays;
Fig. 6 is a longitudinal section through the array from Figs. 4 and 5;
Fig. 7 is a top view of the array in Fig. 4 including hidden lines;
Fig. 8 is a diagrammatic view of the ray path in a gas measuring chamber in the form of a rotational ellipsoid; and
Fig. 9 is a diagrammatic view of the ray path in a gas measuring chamber partially in the form of a rotational paraboloid.

The structure and mode of operation of the gas sensor array according to the invention is explained in greater detail below with reference to the figures. Here, the two advantageous embodiments use a differential measuring principle with a measuring radiation source and a reference radiation source, which are both focused on a single detector. However, the principles according to the invention can also be used only for a single radiation source and detector or a number greater than the radiation sources and detectors shown.

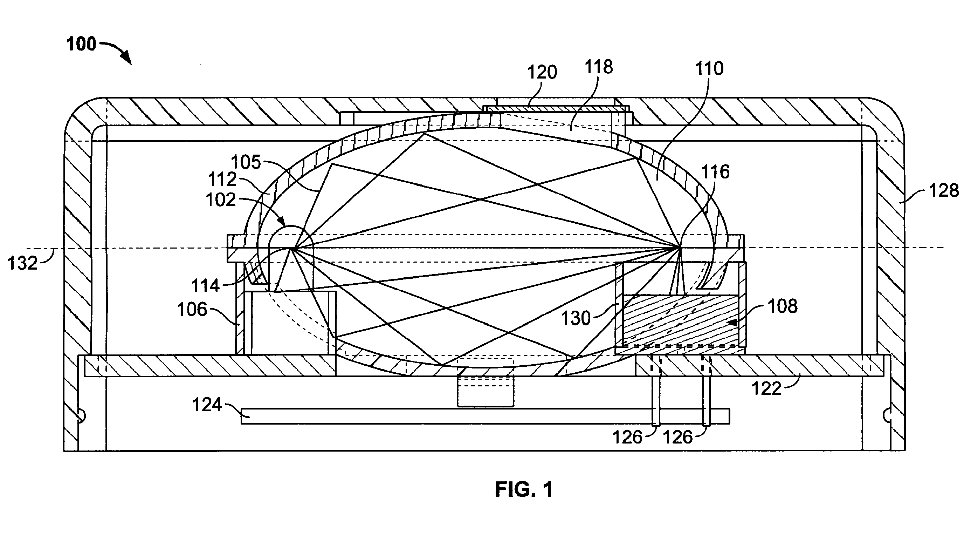

The gas sensor array 100 according to the invention comprises two infrared radiation sources 102, 104 according to the embodiment shown in Fig. 1, which are arranged in a first half 106 of a housing. A detector 108 likewise held in the first half 106, which may, for example, take the form of a pyrodetector, evaluates incoming infrared radiation and supplies an electrical output signal as a function of the measured radiation. Here, the intensity of radiation reaching the detector 108 depends on the composition of a gas contained in a gas measuring chamber 110. As can be seen from Fig. 1, the gas measuring chamber 110 is formed by joining the first-half 106 with a second half 112 of the housing.

According to the invention, inner walls of the gas measuring chamber 110 are vapor-deposited with gold, thus creating a reflective coating. The inner walls take the form of a rotational ellipsoid, wherein the radiation sources 102, 104 are arranged at a first focal point 114. A second focal point 116 is located near the detector 108. Fig. 1 shows a longitudinal section through the gas sensor array 100 according to the invention, whereby light rays 105 have also been drawn in to clarify the principle. As can be seen from the course of the light rays 105, in accordance with the laws of optics, the rotationally elliptical shape of the gas measuring chamber 110 according to the invention greatly improves bundling of the radiation at the detector 108. However, at the second focal point 116, either an additional tilted mirror must be provided to direct the radiation to the detector 108 aligned parallel to a longitudinal axis of the gas sensor array 100 or the detector 108 must be installed crosswise to a longitudinal axis of the gas sensor array 100.

In the case of the gas sensor array 100 shown in Fig. 1 the second half 112 is provided with a gas inlet 118, which is equipped with a filter 120 to remove any particles of dirt.

The first half 106 is arranged together with the radiation sources 102, 104 and the detector 108 on a first printed circuit, for example, a first printed circuit board 122. The signal evaluation electronics belonging to the detector 108 are arranged on a second printed circuit board 124 and are electrically bonded to terminals 126 of the detector 108. To protect it from dust, environmental influences and undesirable scattered light, the entire gas sensor array 100 is additionally enclosed by an external housing 128. This external housing 128 also allows the first and second halves 106, 112 of the housing to be manufactured with much thinner walls, as the mechanical stability is ensured by the external housing 128. It is, however, possible to dispense with this additional external housing 128.

It can generally be demonstrated that for clear separation of the various frequency ranges, only the proportion of light deviating from 0 degrees to a maximum permissible angle of incidence from a main axis 132 of the detector 108 should be evaluated. This maximum permissible angle of incidence depends on such factors as, for example, the choice of the wavelength-selective filter before the detector, which is itself selected according to the light frequency of interest depending on the analyte to be detected. In the case of the gas sensor array 100 shown, the maximum permissible angle of incidence is, for example, approximately 20 degrees, although other values are also possible. For this reason, in the embodiment shown in Fig. 1, the detector 108 is provided with a shield 130, which prevents the incidence of rays deviating more than 20 degrees from the main axis 132 of the detector 108. However, it is also possible to dispense with the shield 130.

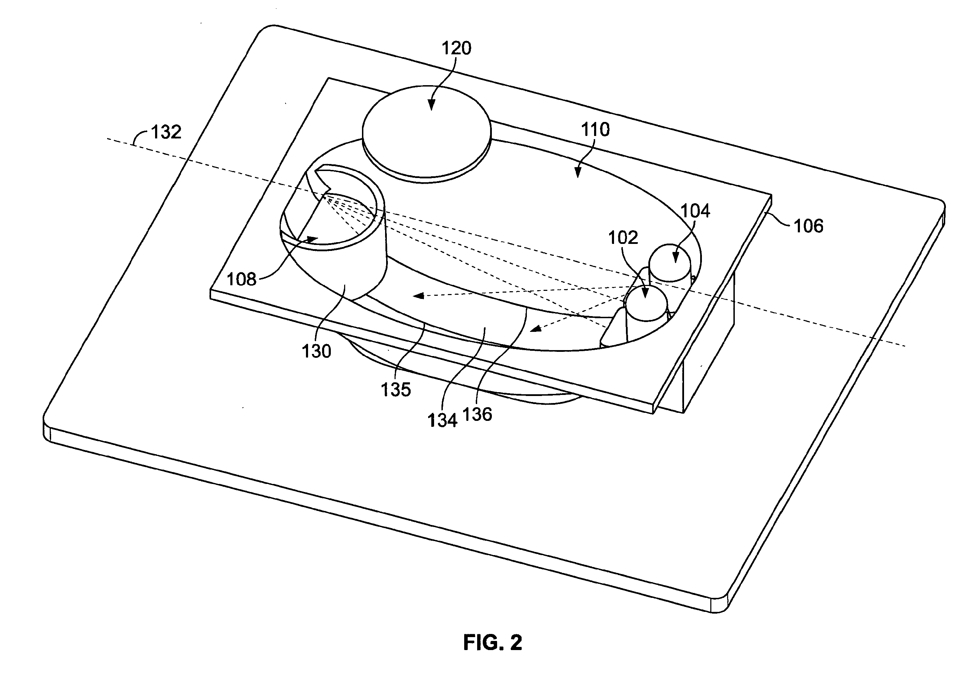

Fig. 2 is a perspective view of the embodiment from Fig. 1, whereby the upper half 112 of the housing and the external housing 128 are not shown for greater clarity. As can be seen from this view, the radiation sources 102, 104 are arranged next to each other. To ensure that each of the radiation sources 102, 104 is arranged at the first focal point 114 in relation to a region of the rotational ellipsoid assigned thereto, a connecting region 134 is added between the detector 108 and the radiation sources 102, 104 according to the distance of the radiation sources 102, 104, which region follows the curvature of the rotational ellipsoid in the direction of the main axis 132 but is not curved crosswise to this direction. In the embodiment shown, the longitudinal limits 135, 136 of the connecting region 134 run substantially parallel to each other and the path of the light rays 105 of the two radiation sources 102, 104 also run substantially parallel to each other. The shield 130 is arranged around the detector 108 so that only the light rays 105 deviating between 0 degrees and approximately 20 degrees from the main axis 132 reach the detector 108. However, other values for the maximum permissible angle of incidence are likewise possible as already mentioned, depending on the gas component to be detected.

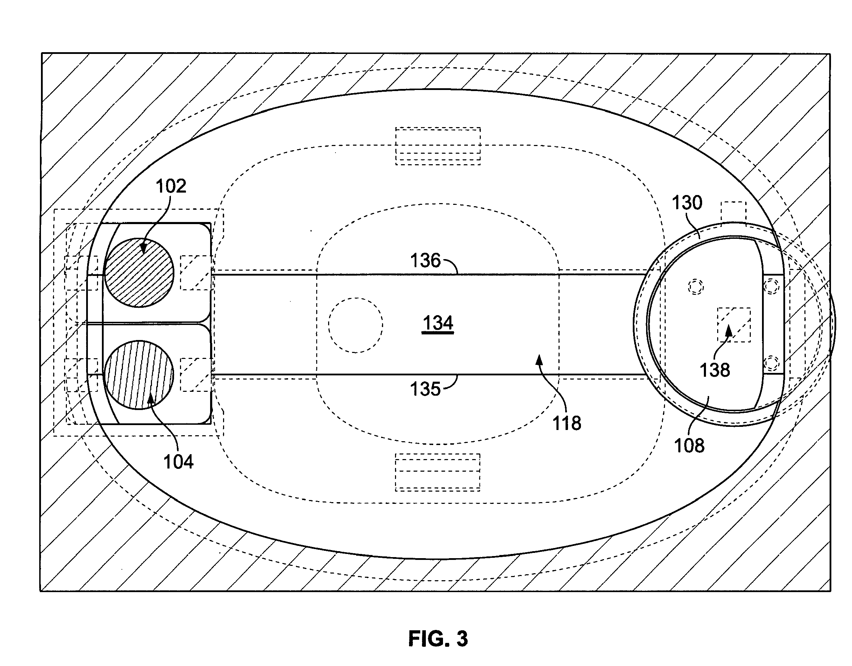

Fig. 3 is a partially cut-away top view of the gas sensor array 100 shown in Fig. 1, whereby lines that are not visible have been added in a broken stroke to bring out the basic elements with greater precision. As can be seen from this figure, the detector 108 has a sensor 138, which is positioned substantially parallel to the main axis 132, and it is thus necessary, as is clear from Fig. 1, to provide an additional tilted mirror at the second focal point 116 to deflect the radiation bundled at the second focal point 116 to the sensor 138. According to the present embodiment, the two radiation sources 102, 104 are arranged next to each other and the longitudinal limits 135, 136 of the connecting region 134 run substantially parallel to each other. Each of the two radiation sources 102, 104 is thus located at the focal point of one half of the rotationally elliptical gas measuring chamber 110 associated therewith. This variant represents a solution that is very simple to perform on assembly but has the disadvantage that bundling in the sensor 138 also takes place at two focal points.

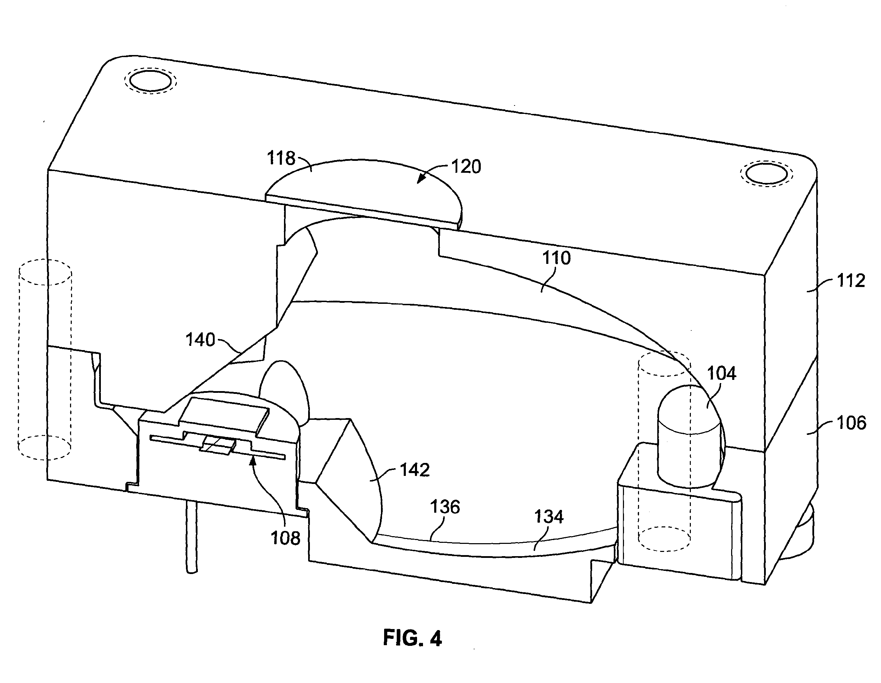

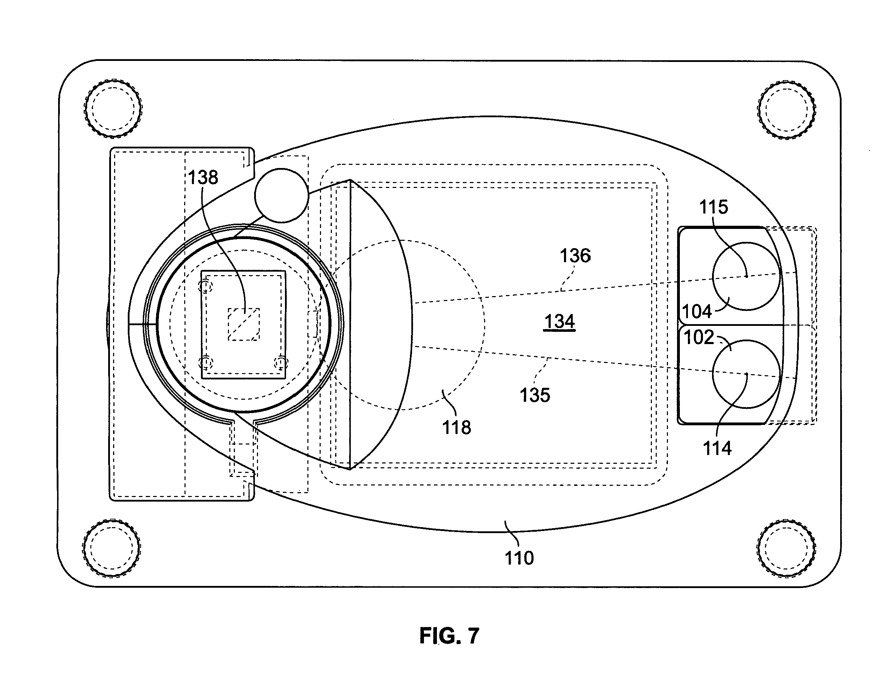

For this reason an improved embodiment, which is explained below in detail with reference to Figs. 4 to 7, uses a system to direct the light rays 105 of the two radiation sources 102, 104 in which, as can be seen from the top view in Fig. 7, the connecting region 134 is formed so that its longitudinal limits 135, 136 enclose an angle corresponding to the angle enclosed by the centre lines of the radiation sources 102, 104. This produces two rotationally elliptical regions of the gas measuring chamber 110, which have different first focal points 114, 115 but only one second focal point 116, which is located at the detector 108.

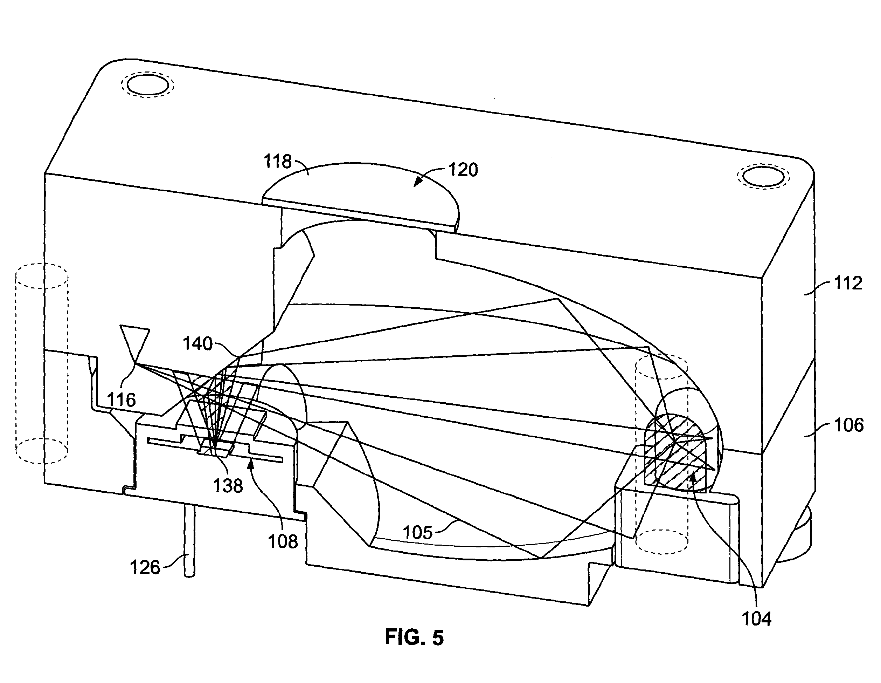

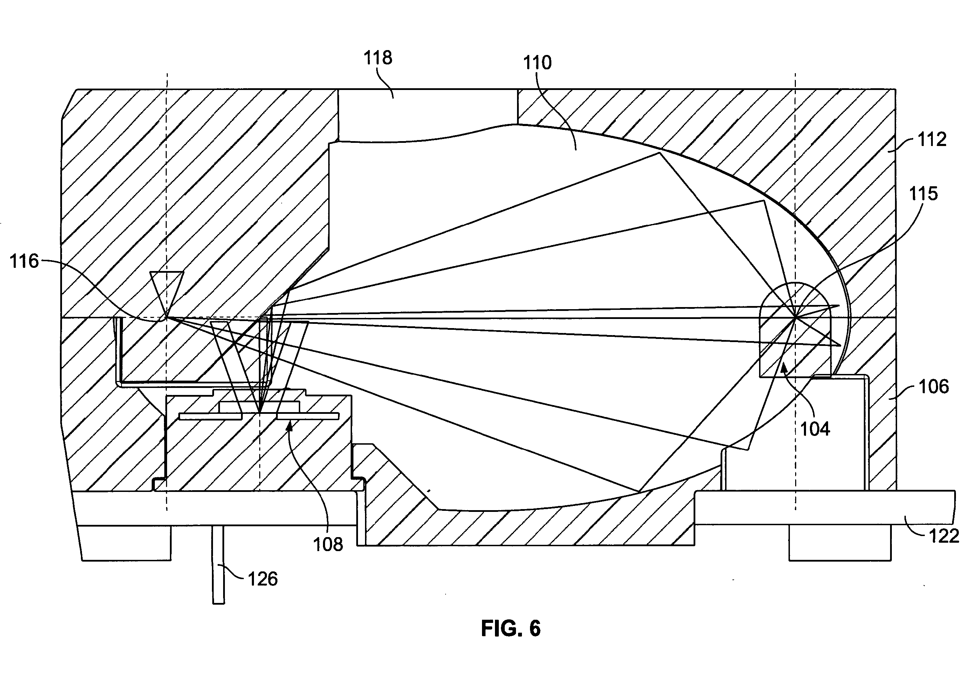

A perspective representation of the second embodiment opened along the main axis 132 of the gas sensor array 100 is shown in Fig. 4. Here the inner walls of the gas measuring chamber 110 only partially take the form of a rotational ellipsoid, and a flat tilted mirror 140 is arranged at the second focal point 116 of the rotational ellipsoid. If this is considered together with the view shown in Fig. 5 and the sectional view in Fig. 6, in which the light rays 105 have been drawn in diagrammatically, it can be seen that the tilted mirror 140 is arranged above the detector 108 so that the light rays 105, which would arrive at the second focal point 116, are instead focused on the sensor 138. To clarify the functional principle, both the real and the virtual ray paths have been marked in this view. The second focal point 116 is according to this embodiment now a virtual focal point, whereas the light rays 105 for the embodiment shown in Fig. 1 also actually meet at the second focal point 116, which is a real focal point.

The present miniaturized solution according to the invention also has the advantage that all deflective optical elements, such as the concave mirror and tilted mirror 140, can be manufactured as a single piece from the first and second halves 106, 112 of the housing by metal coating or application of another coating to the first and second halves 106, 112 formed accordingly. As can be seen from the view in Fig. 4, another tilted mirror 142 is provided in a region below the detector 108. This tilted mirror 142 allows the light efficiency to be increased further by deflecting the light rays 105 striking it to the opposite rotationally elliptical inner wall from where the radiation can then be focused on the tilted mirror 140.

The assembly of the gas sensor array 100 is explained in detail below with reference to Figs. 1 to 7.

In a subsequent assembly step the detector 108 and the radiation sources 102, 104 are mounted on the first printed circuit board 122. The second printed circuit board 124, on which other electronic components are mounted, such as those required for sensor signal evaluation and control of the infrared radiation sources, is connected to the terminals 126 of the detector 108 and accordingly also to the radiation sources 102, 104.

In a next process step, the first half 106 of the housing is mounted on the first printed circuit board 122 so that the radiation sources 102, 104 and the detector 108 are held in corresponding recesses. The first half 106 is shaped here so that it forms a first half of the rotationally elliptical gas measuring chamber 110. To ensure overall installation space for geometrical extension of the measuring chamber 110 crosswise to the main axis 132, a corresponding opening, into which the measuring chamber 110 can reach, is provided in the first printed circuit board 122.

In a subsequent work step the second half 112 of the housing is positioned on the first half 106 of the housing and fixed in place, for example, using a screwed connection. If necessary, the external housing 128 can also be provided to ensure additional protection from mechanical stress and any penetration of scattered light causing interference. However, as can be seen from the embodiment in Figs. 4 to 7, the external housing 128 may already be contained in the first and second half halves 106, 112.

Although such integration of the first and second halves 106, 112 and the external housing 128 requires more material and thus also increases the weight, it simplifies the manufacturing process to a significant extent and also offers very high mechanical stability. A boundary layer between the first half 106 and the second half 112 of the housing can be additionally sealed with a suitable sealing device, as can be seen from EP 1 566 626 A1.

The present invention makes it possible, by designing the gas measuring chamber 110 in the form of a rotational member produced by a conical section and arranging the two radiation sources 102, 104 next to each other, to provide an optimized light channel, which is simple, and provides a much greater light efficiency with the same radiation source lamp intensity. By reducing the proportion of light outside the maximum permissible angle of incidence with reference to the main axis 132 of the detector 108, it is also possible to achieve a clearer separation of the various frequency ranges. This means that the gas sensor array 100 according to the invention is above all suitable for use in the motor vehicle engineering sector.

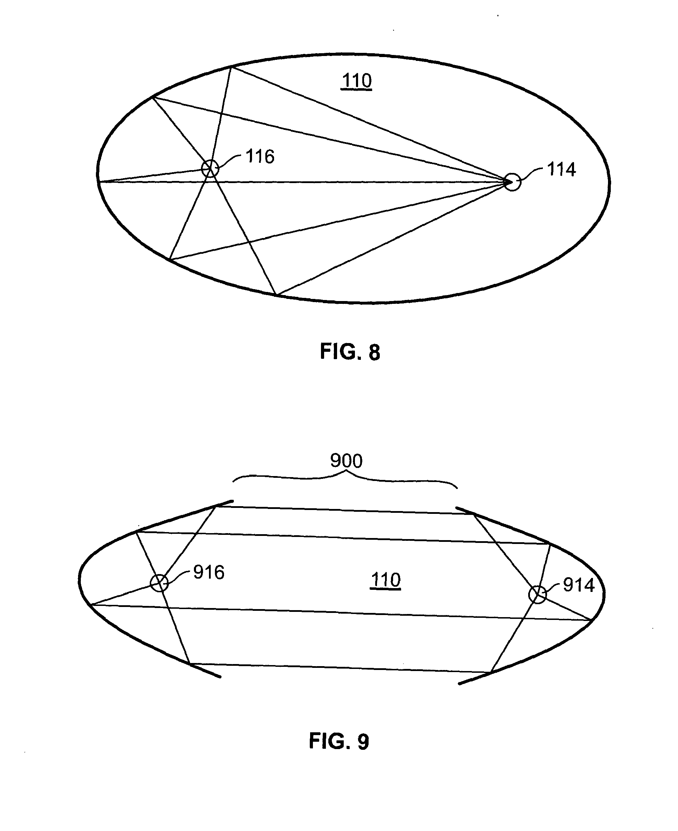

Although a rotationally elliptical design of the gas measuring chamber 110 has been assumed in all cases in Figures 1 to 7, it is also possible to use other conical sections to produce the gas measuring chamber 110. Figures 8 and 9 show, for example, a diagrammatic comparison of the direction of the light rays 105 for a rotational ellipsoid (Fig. 8) where the inner walls of the gas measuring chamber 110 take the form of a rotational paraboloid. According to Fig. 9, two parabolic mirrors are set up facing each other so that this embodiment also results in bundling of the radiation emitted at the first focal point 914 at a second focal point 916 at which the detector 108 can be arranged. One of the advantages of such a design is that a region of a parallel ray path 900 can be selected in terms of length according to the requirements placed on the sensitivity of the gas sensor array 100. With very low detection limits, it may be necessary to extend the optical path length through the gas measuring chamber 110 to generate a sufficiently great detection signal.

## Claims

1. Gas sensor array with at least one radiation source (102, 104) emitting radiation, a gas measuring chamber (110), which can be filled with a measuring gas that contains at least one analyte to be measured, at least one radiation detector (108), which generates an output signal dependent on the presence and/or concentration of the analyte, and a housing (106, 112), in which the source of radiation, the gas measuring chamber and the detector are arranged,
wherein the gas measuring chamber (110) has at least one concave mirror, which is formed by reflective inner walls of the housing, and the inner walls at least partially take the form of a rotational member produced by a conical section, which is designed in such a manner as to result in bundling of the emitted radiation in a region (116) at which the detector is arranged.

2. Gas sensor array according to claim 1, wherein the rotational member is a rotational ellipsoid.

3. Gas sensor array according to claim 2, wherein the at least radiation source (102, 104) is arranged at a first focal point (114, 115) of the rotational ellipsoid and the detector (108) is arranged in the surrounding region of a second focal point (116) of the rotational ellipsoid.

4. Gas sensor array according to at least one of the preceding claims, wherein at the region in which the detector is arranged, at least one preferably flat tilted mirror (140) is provided to deflect the bundled radiation onto a sensor (138) of the detector.

5. Gas sensor array according to at least one of the preceding claims, wherein the housing is formed by a first half (106) and a second (112) half, which are joined together in such a manner as to form a substantially closed gas measuring chamber.

6. Gas sensor array according to claim 4, wherein the radiation source (102, 104) and the detector (108) are at least partially held in the first half (106).

7. Gas sensor array according to at least one of the preceding claims, wherein it is designed so that it can be mounted on a first printed circuit board (122).

8. Gas sensor array according to at least one of the preceding claims, wherein the radiation to be detected is infrared radiation and the at least one radiation source is formed by an infrared radiation source, preferably a light-emitting diode or a lamp emitting a broadband light spectrum.

9. Gas sensor array according to at least one of the preceding claims, wherein at least one measuring radiation source (102) and at least one reference radiation source (104) are provided, which are arranged symmetrically to at least one main axis (132) of the gas measuring chamber, and in that the detector is arranged on this main axis in such a manner that the paths of the rays of the radiation sources have the same effective path length to the detector.

10. Gas sensor array according to claim 9, wherein the reflective inner walls have a connecting region (134) between the two radiation sources and the detector, which region is shaped as part of an elliptical cylinder jacket, which in a longitudinal direction follows the curvature of the rotational ellipsoid and is not curved in a transversal direction, a flat projection of the connecting region being rectangular.

11. Gas sensor array according to claim 9, wherein the reflective inner walls have a connecting region (134) between the two radiation sources and the detector, which is shaped as part of an elliptical cylinder jacket, which in a longitudinal direction follows the curvature of the rotational ellipsoid and is not curved in a transversal direction, a flat projection of the connecting region being trapezoidal.

12. Gas sensor array according to at least one of the preceding claims, wherein at least one temperature sensor is provided for monitoring the temperature in the gas measuring chamber.

13. Gas sensor array according to at least one of the preceding claims, wherein the housing can preferably be made from a plastic material using injection-molding and the reflective coating takes the form of a metal coating.

14. Gas sensor array according to claim 13, wherein the metal coating, preferably a layer of gold, is applied by means of sputtering, vapor-deposition or electroplating.

15. Gas sensor array according to at least one of the preceding claims, wherein it is designed to detect gaseous analytes, preferably carbon dioxide, and/or to determine the concentration thereof.
